# EUROPÄISCHE PATENTSCHRIFT

(11) **EP 3 126 104 B1**
(45) Veröffentlichungstag und Bekanntmachung des Hinweises auf die Patenterteilung: **18.09.2019**
(21) Anmeldenummer: 15713168.1
(22) Anmeldetag: 25.03.2015
(51) Int. Cl.: B25J 19/00, H02G 11/00

(54) **FÜHRUNGSSYSTEM FÜR VERSORGUNGSLEITUNGEN UND ROBOTER MIT FÜHRUNGSSYSTEM**
GUIDING SYSTEM FOR SUPPLY LINES AND ROBOT HAVING A GUIDING SYSTEM
SYSTÈME DE GUIDAGE DE LIGNES D'ALIMENTATION ET ROBOT COMPORTANT UN TEL SYSTÈME DE GUIDAGE

(30) Priorität: 03.04.2014 DE 202014101590 U
(43) Veröffentlichungstag der Anmeldung: 08.02.2017
(73) Patentinhaber: Igus GmbH, 51147 Köln (DE)
(72) Erfinder: JAEKER, Thilo-Alexander, 53757 Sankt Augustin (DE); STEEGER, Ralf, 53797 Lohmar (DE)
(74) Vertreter: Lippert Stachow Patentanwälte Rechtsanwälte
(86) Internationale Anmeldenummer: PCT/EP2015/056468
(87) Internationale Veröffentlichungsnummer: WO 2015/150197

(56) Entgegenhaltungen:
- EP-A1- 0 669 690
- DE-A1-102009 037 515
- DE-U1-202011 004 786
- FR-A1- 2 781 315

## Beschreibung

Die Erfindung betrifft ein Führungssystem für Versorgungsleitungen für ein Handhabungsgerät, insbesondere für einen Roboter, mit einer Führungsbasis, die eine Führungsschiene aufweist, einem durch die Führungsbasis längs eines linearen Verfahrweges geführten Umlenkelement, das an einem Schlitten angeordnet ist, der durch die Führungsschiene längs des Verfahrweges geführt ist, und einem ketten-, schlauch- oder bandartigen Strang, in oder an dem die Versorgungsleitungen anordenbar sind, wobei der Strang, einen Umlenkbogen bildend, um das Umlenkelement geführt ist und zwei an den Enden des Umlenkbogens anschließende Trume mit jeweils einem an deren freien Enden angeordneten Anschlusspunkt aufweist, nämlich einem ersten, zur Führungsbasis stationären Anschlusspunkt und einem zweiten, relativ zur Führungsbasis beweglichen Anschlusspunkt, und wobei das Umlenkelement durch eine auf das Trum mit dem zweiten Anschlusspunkt wirkende Zugkraft längs des Verfahrweges gegen eine Rückstellkraft von einer eingezogenen Position in eine ausgezogene Position verfahrbar ist, wobei die Rückstellkraft durch eine an oder in der Führungsbasis angeordnete Rückstelleinrichtung erzeugbar ist.

Die Erfindung betrifft weiterhin ein Handhabungsgerät, insbesondere Roboter, mit einem derartigen Führungssystem, wobei die Führungsbasis an einem ersten Teil des Handhabungsgerätes angeordnet und das Trum des ketten-, schlauch- und bandartigen Strangs mit dem ersten Anschlusspunkt mit diesem Teil verbunden und das Trum mit dem zweiten Anschlusspunkt mit einem zum ersten Teil beweglichen zweiten Teil des Handhabungsgerätes verbunden ist.

Ein solches Führungssystem und Handhabungsgerät mit einem solchen Führungssystem ist aus der DE 20 2011 004 786 U1 bekannt. Bei diesem System ist als Rückstelleinrichtung für das als Umlenkrolle ausgebildete Umlenkelement ein pneumatischer Druckzylinder vorgesehen, der mit seinem Druckstempel an einem Anker angreift, in dem die Achse der Umlenkrolle gelagert ist und der in eine Führungsschiene gleitverschieblich eingreift.

Der die Rückstellkraft für die Umlenkrolle erzeugende pneumatische Druckzylinder und die erforderliche Energieversorgung des Druckzylinders benötigen einen entsprechend dimensionierten Raum am oder im Handhabungsgerät und sind relativ aufwändig.

Aus der EP 0 669 690 A1 ist ein Führungssystem für ein Leitungskabel bekannt, in dem das Kabel durch ein durch eine Führungsbasis geführtes und gegen die Rückstellkraft einer Rückstelleinrichtung verfahrbares Umlenkelement geführt ist, wobei die Rückstelleinrichtung ein elastisches Seil aufweist, das um eine zur eingezogenen Position des Umlenkelements benachbart an der Führungsbasis angeordnete Umlenkeinrichtung geführt ist und daran anschließend einen ersten Abschnitt aufweist, der mit dem Umlenkelement verbunden ist, und einen zweiten Abschnitt aufweist, der mit der Führungsbasis verbunden ist. Das Ende des ersten Abschnitts des elastischen Seils ist an einer Abrollsicherung des als Umlenkrolle ausgebildeten Umlenkelements befestigt.

Die aus dieser Druckschrift bekannte Umlenkeinrichtung ist innerhalb der als Führungsschiene ausgebildeten Führungsbasis angeordnet. Die die Umlenkeinrichtung und die beiden Abschnitte des elastischen Seils umfassende Rückstelleinrichtung erstreckt sich über einen relativ großen Bereich im Inneren der Führungsschiene, so dass das die Führungsschiene einschließende Führungssystem für das Leitungskabel einen relativ großen Raum einnimmt. Weiterhin kommt dem Führungssystem aufgrund der notwendigen Dimensionierung der Führungsbasis ein entsprechend hohes Gewicht zu. Die Anordnung der Umlenkeinrichtung in der Führungsschiene erfordert einigen Aufwand bei der Ausgestaltung der Führungsschiene sowie beim Einsetzen und gegebenenfalls Entfernen der Umlenkeinrichtung.

Der vorliegenden Erfindung liegt die Aufgabe zugrunde, ein Führungssystem mit einer Rückstelleinrichtung bereit zu stellen, das einen geringeren Raum am oder im Handhabungsgerät erfordert, weniger aufwändig und leichter ist und sich daher auch für kleinere Handhabungsgeräte, insbesondere Roboter, eignet.

Die Aufgabe wird erfindungsgemäß dadurch gelöst, dass bei einem Führungssystem der eingangs genannten Art die Rückstelleinrichtung mindestens ein elastisches Seil oder elastisches Band aufweist, das um eine zur eingezogenen Position des Umlenkelements benachbart an der Führungsbasis angeordnete Umlenkeinrichtung geführt ist und daran anschließend einen ersten Abschnitt aufweist, der mit dem Umlenkelement verbunden ist, und einen zweiten Abschnitt aufweist, der mit der Führungsbasis verbunden ist, wobei das Ende des ersten Abschnitts des mindestens einen elastischen Seils oder Bandes am Schlitten befestigt ist, und die Umlenkeinrichtung an der Stirnseite der Führungsschiene angeordnet ist, die in Richtung des Verfahrweges von der ausgezogenen in die eingezogene Position des Umlenkelements weist, und ein Gehäuse aufweist, das an seiner zum Umlenkelement hinweisenden Stirnseite eine Öffnung für die beiden Abschnitte des mindestens einen elastischen Bandes oder Seils aufweist.

Aufgrund der ein eigenes Gehäuse aufweisenden Umlenkeinrichtung und deren Anordnung an der Stirnseite der Führungsschiene kann die Dimensionierung der Führungsschiene weitestgehend auf ihre Führungsfunktion für das Umlenkelement reduziert und das Führungssystem für Versorgungsleitungen für ein Handhabungsgerät so gestaltet werden, dass es einen relativ geringen Bauraum einnimmt, ein relativ geringes Gewicht besitzt und technisch relativ einfach und daher weniger kostenaufwändig zu realisieren ist. Aufgrund dieser Vorteile ist es insbesondere für kleinere Handhabungsgeräte, insbesondere Roboter, geeignet.

Die mindestens ein elastisches Seil oder elastisches Band aufweisende Rückstelleinrichtung benötigt einen relativ geringen Bauraum, so dass das erfindungsgemäße Führungssystem in Bereichen eines Handhabungsgerätes anbringbar ist, für die das bekannte System nicht geeignet wäre. Es ist daher insbesondere bei kleineren Robotern einsetzbar, auch wegen seines relativ geringen Gewichtes. Weiterhin ist die Rückstelleinrichtung technisch relativ einfach zu realisieren und daher weniger kostenaufwändig.

Als elastisches Seil oder elastisches Band kommen Seile bzw. Bänder aus natürlichem oder synthetischem Gummi in Betracht, die eine den Anforderungen der vorliegenden Erfindung genügende Dehnbarkeit über den Verfahrweg des Umlenkelements von seiner eingezogenen Position zu seiner ausgezogenen Position bezüglich der Führungsbasis aufweisen.

Das aus natürlichen oder synthetischen Gummi bestehende Seil oder Band weist vorzugsweise eine Ummantelung auf, die seine Abriebfestigkeit und/oder Gleitfähigkeit erhöht. Die Ummantelung übt somit eine Schutz- bzw. Gleitfunktion auf das elastische Seil oder Band aus, das beim Verfahren des Umlenkelements um dieses geführt und dabei einer Reibung ausgesetzt ist. Im einfachsten Falle kann es sich bei der Ummantelung um eine auf das Seil oder Band aufgesprühte dünne Kunststoffschicht, zum Beispiel aus Teflon®, handeln. Vorzugsweise ist für die Ummantelung ein Geflecht aus die Verschleißfähigkeit und/oder Gleitfähigkeit des Seils oder Bandes erhöhenden Kunststofffasern vorgesehen, wie zum Beispiel Fasern aus Polyethylen, Kevlar®, Polyamiden oder Aramiden. Das Geflecht aus derartigen Fasern ist vorzugsweise so ausgebildet, dass es sich in Längsrichtung des elastischen Seils oder Bandes dehnen und wieder zusammenziehen kann.

Aufgrund der Umlenkung des mindestens einen elastischen Seils oder elastischen Bandes durch eine an oder in der Führungsbasis angeordnete Umlenkeinrichtung ist die Länge des beim Verfahren von der eingezogenen Position in die ausgezogene Position des Umlenkelements zu dehnenden Seils oder Bandes größer als der Verfahrweg. Da die Dehnung des elastischen Seils oder Bandes sich somit über eine größere Länge als diejenige des Verfahrweg erstreckt, stellt sich eine relativ konstante Federkraft des Seils bzw. Bandes über den Verfahrweg des Umlenkelements ein.

Der mit der Führungsbasis verbundene zweite Abschnitt des mindestens einen elastischen Seils oder Bandes erstreckt sich bevorzugt über mindestens die Länge des Verfahrwegs des Umlenkelements zwischen dessen eingezogener Position und dessen ausgezogener Position.

Weiterhin ist das mindestens eine elastische Seil oder Band in der Rückstelleinrichtung so angeordnet und mit dem Umlenkelement und der Führungsbasis so verbunden, dass es in der eingezogenen Position des Umlenkelements eine vorbestimmte Zugspannung aufweist.

Die Rückstelleinrichtung kann aus Sicherheitsgründen insbesondere zwei elastische Seile oder elastische Bänder aufweisen.

Die Umlenkeinrichtung kann bei derartiger Anordnung den Verfahrweg des Umlenkelements in die eingezogene Position begrenzen.

Weiterhin kann die Umlenkeinrichtung eine Rolle aufweisen, an deren Umfang das elastische Seil oder Band anliegt und die im Gehäuse gelagert ist.

In einer bevorzugten Ausbildung der Führungsschiene erstreckt sich der zweite Abschnitt des elastischen Seils oder Bandes in einer Rinne oder einem seitlich geschlossenen Kanal der Führungsschiene. Die Rinne bzw. der Kanal dienen zum Schutz und zur Führung des sich zwischen der Umlenkeinrichtung und dem Befestigungspunkt an der Führungsschiene erstreckenden Abschnitts des elastischen Seils oder Bandes.

Auch der, erste mit dem Umlenkelement für den Strang verbundene Abschnitt des elastischen Seils oder Bandes kann sich innerhalb der Führungsschiene erstrecken, wobei sein Endbereich mit einem sich durch einen Schlitz ins Innere der Führungsschiene erstreckenden Bereich des Schlittens verbunden ist.

Zum Schutz des elastischen Seils oder Bandes und zur Vermeidung des Eindringens von Fremdpartikeln in den Schlitz kann der Schlitz durch ein mit dem Schlitten mitlaufendes, aufrollbares Band oder durch einen Faltenbalg oder dergleichen nach außen geschlossen sein.

In einer bevorzugten Ausbildung wird als Führungsschiene eine Profilschiene verwendet. Die Profilschiene besteht vorzugsweise aus Metall, insbesondere Aluminium und kann auf einfache Weise durch Ablängen an die gewünschte Länge des Verfahrwegs des Umlenkelements angepasst werden. Sie kann alternativ auch aus einem geeigneten Kunststoffmaterial, das insbesondere gute Gleiteigenschaften aufweist, bestehen.

Insbesondere kann das Gehäuse als Anschlag für die Begrenzung des Verfahrweges des Schlittens auf der Profilschiene von der angezogenen Position des Umlenkelements in die eingezogene Position dienen.

Die Profilschiene weist in einer bevorzugten Ausbildung zwei seitlich vorstehende Gleitschienen auf, wobei der Schlitten in seinen seitlichen Bereichen zwei Gehäuseteile zur Aufnahme der Gleitschienen und ein mit den beiden Gehäuseteilen verbundenes plattenförmiges Montageteil zur Befestigung des Umlenkelements aufweist. Die Gehäuseteile können als Gehäuselager mit zum Beispiel darin angeordneten Gleitlagern ausgebildet sein.

Bevorzugt ist das Umlenkelement als Umlenkrolle ausgebildet, an deren Umfang der Umlenkbogen des die Versorgungsleitungen enthaltenden Strangs anliegt und deren Achse am Schlitten drehbar gelagert ist.

Die Achse der Umlenkrolle ist bevorzugt senkrecht zur Achse der als Rolle ausgebildeten Umlenkeinrichtung für das elastische Seil oder Band angeordnet.

Das Ende des zweiten Abschnitts des mindestens einen elastischen Seils oder Bandes kann an dem Ende der Führungsschiene befestigt sein, das in Richtung des Verfahrweges von der eingezogenen Position zur ausgezogenen Position des Umlenkelements weist.

Am Ende der Führungsschiene, das in Richtung des Verfahrweges von der eingezogenen Position zu der ausgezogenen Position des Umlenkelements weist, kann ein quer zur Führungsschiene verlaufender und an deren beiden Seiten vorstehender Steg angeordnet sein, an dessen einem Endbereich eine Halteeinrichtung zur stationären Halterung des Trums des die Versorgungsleitungen enthaltenden Strangs mit dem ersten Anschlusspunkt und an dessen anderem Endbereich eine Führung für das Trum des Strangs mit dem zweiten Anschlusspunkt aufweist. Als Halteeinrichtung kann ein den Strang an der betreffenden Stelle fixierender Haltering verwendet werden. Die Führung das Trum des Strangs mit dem zweiten Anschlusspunkt kann als ringförmige Gleitdurchführung, gegebenenfalls mit einem Pendellager, ausgebildet sein.

Die Führungsschiene kann an ihrer dem Schlitten gegenüberliegenden Längsseite Halterungsmittel aufweisen, die in Längsrichtung der Führungsschiene verstellbar und feststellbar angeordnet sind. Dazu können an einer Platte der Halterungsmittel angeordnete Klemmschuhe vorgesehen sein, die in seitliche Nuten der Führungsschiene eingreifen. Gegenstand der vorliegenden Erfindung ist weiterhin ein Handhabungsgerät, insbesondere Roboter, mit einem der vorstehend definierten Führungssysteme, wobei die Führungsbasis an einem ersten Teil des Handhabungsgerätes angeordnet ist und das Trum des ketten-, schlauch- oder bandartigen Strangs mit dem ersten Anschlusspunkt mit diesem Teil verbunden und das Trum mit dem zweiten Anschlusspunkt mit einem zum ersten Teil beweglichen zweiten Teil des Handhabungsgerätes verbunden ist.

Der Strang, in dem die Versorgungsleitungen anordenbar sind, ist bevorzugt als geschlossene rohrförmige Energieführungskette, deren Glieder durch im Inneren der Kette angeordnete Gelenkelemente verschwenkbar miteinander verbunden sind, ausgebildet. Die Gelenkverbindung der Glieder einer solchen Kette lässt dreidimensionale Bewegungen der Kette zu. Ein Ausführungsbeispiel der vorliegenden Erfindung wird im Folgenden anhand der Zeichnung näher beschrieben. In der Zeichnung zeigen:
- Fig. 1: eine perspektivische Ansicht eines erfindungsgemäßen Führungssystems im eingezogenen Zustand,
- Fig. 2: eine perspektivische Ansicht des in Fig. 1 dargestellten Führungssystems im ausgezogenen Zustand,
- Fig. 3: eine Seitenansicht des Führungssystems gemäß Fig. 1 in Richtung des Pfeils III,
- Fig. 4: eine stirnseitige Ansicht des Führungssystems gemäß Fig. 1 in Richtung des Pfeils IV,
- Fig. 5: eine Schnittdarstellung längs der Linie A-A in Fig. 3,
- Fig. 6: eine Schnittdarstellung längs der Linie B-B in Fig. 4,
- Fig. 7: eine vergrößerte Ansicht des Bereichs C in Fig. 6,
- Fig. 8: eine Seitenansicht des Führungssystems im ausgezogenen Zustand gemäß Fig. 2 in Richtung des Pfeils VIII,
- Fig. 9: eine Schnittdarstellung längs der Linie A-A in Fig. 8,
- Fig. 10: einen Längsschnitt durch das in Fig. 8 dargestellte Führungssystem im ausgezogenen Zustand analog zu Fig. 6.

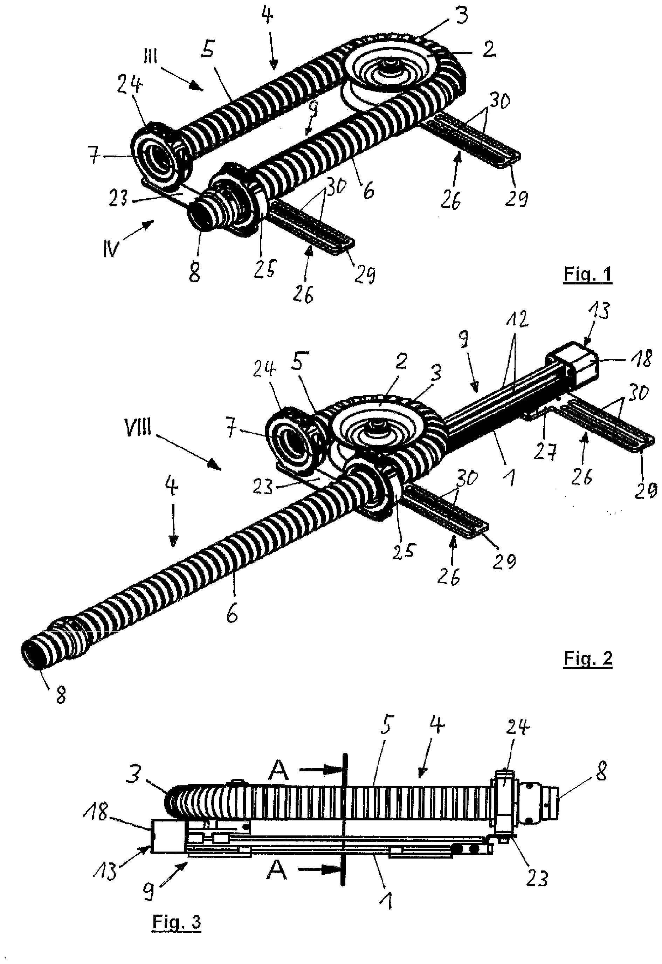

In den Fig. 1 und 2 ist ein Ausführungsbeispiel eines Führungssystems für (in der Zeichnung nicht dargestellte) Versorgungsleitungen für ein (in der Zeichnung nicht dargestelltes) Handhabungsgerät, insbesondere für einen Roboter, dargestellt, das eine Führungsbasis 1 aufweist, durch die ein als Umlenkrolle ausgebildetes Umlenkelement 2 längs eines linearen Verfahrweges zwischen einer eingezogenen Position (Fig. 1) und einer ausgezogenen Position (Fig. 2) geführt werden kann. Um das Umlenkelement 2 ist der Umlenkbogen 3 eines kettenartigen Strangs 4 geführt, der zwei sich an den Umlenkbogen 3 anschließende Trume 5 und 6 aufweist. Das Trum 5 weist an seinem freien Ende einen ersten, zur Führungsbasis 1 stationären Anschlusspunkt 7 und das Trum 6 einen zweiten, relativ zur Führungsbasis 1 beweglichen Anschlusspunkt 8 auf.

Befindet sich das Umlenkelement 2 in seiner eingezogenen Position (Fig. 1) und wird auf das Trum 6 mit dem zweiten Anschlusspunkt 8 eine Zugkraft in Richtung des Pfeils Z ausgeübt, so wird das Umlenkelement 2, durch die Führungsbasis 1 geführt, gegen eine Rückstellkraft in die ausgezogene Position (Fig. 2) verfahren. Die Rückstellkraft wird durch eine an der Führungsbasis 1 angeordnete Rückstelleinrichtung 9 erzeugt.

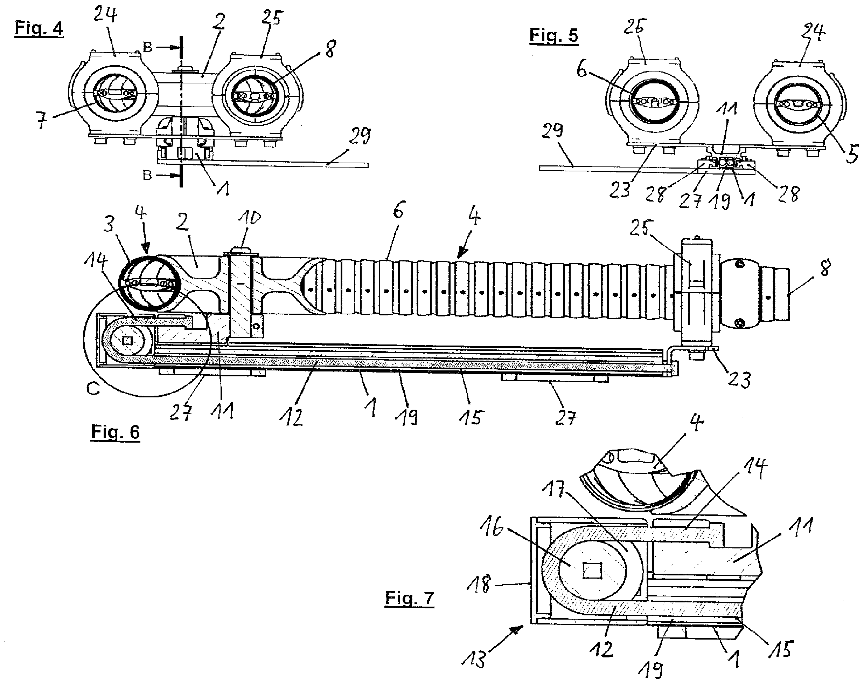

Wie genauer aus den Fig. 5 und 6 bzw. 9 und 10 hervorgeht, ist die Führungsbasis 1 als eine Profilschiene ausgebildet. Diese besteht aus hartanodisiertem Aluminium und ist durch Ablängen aus einem Profilstrang an die gewünschte Länge des Verfahrwegs des Umlenkelements 2 angepasst. Das als Umlenkrolle ausgebildete Umlenkelement 2 ist mit seiner Achse 10 drehbar in einem Schlitten 11, der auf der Profilschiene geführt ist, gelagert.

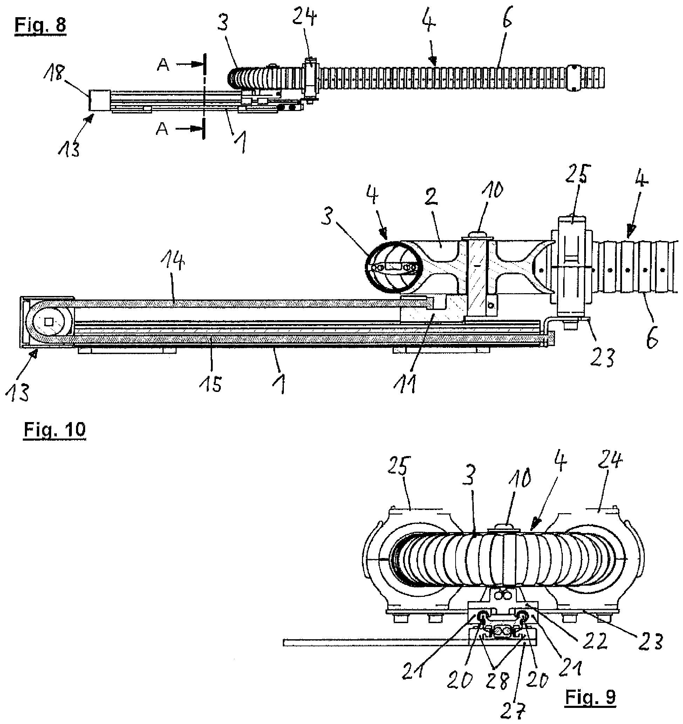

Wie insbesondere in den Längsschnitt-Darstellungen der Fig. 6 und 10 gezeigt ist, weist die Rückstelleinrichtung 9 mindestens ein elastisches Seil 12 auf, das um eine zur eingezogenen Position (Fig. 6) des Umlenkelements benachbart an der Führungsbasis 1 angeordnete Umlenkeinrichtung 13 geführt ist und daran anschließend einen ersten Abschnitt 14 aufweist, der mit dem Schlitten des darauf angeordneten Umlenkelements 2 verbunden ist, und einen zweiten Abschnitt 15 aufweist, der mit der Führungsbasis 1 verbunden ist. Die Fixierung des freien Endes des ersten Abschnitts 14 des elastischen Seils 12 am Schlitten 11 ist in den Fig. 6 und 10 nur schematisch dargestellt, ebenso die Fixierung des freien Endes des zweiten Abschnitts 15 an der Führungsbasis 1. Wie aus den Figuren 1 und 2 sowie den Querschnittsdarstellung in den Figuren 5 und 9 hervorgeht, sind zwei elastische Seile 12 vorgesehen, deren erste Abschnitte 14 mit dem Schlitten 11 und deren zweite Abschnitte 15 mit der Führungsbasis 1 verbunden sind.

Wie in den Fig. 6, 7 und 10 gezeigt ist, weist die Umlenkeinrichtung 13 für die beiden elastischen Seile jeweils eine Rolle 16 auf, an deren Umfang das jeweilige elastische Seil anliegt. Beim Verfahren des Umlenkelements 2 aus dessen eingezogener Position in die ausgezogene Position werden die beiden Seile 12 um die Rolle 16 geführt, so dass die elastischen Seile 12 über ihre gesamte Länge, insbesondere auch über ihre zweiten Abschnitte 15, erfolgt. Daher ergibt sich eine über den Verfahrweg des Umlenkelements 2 weitgehend konstante Rückstellkraft.

Wie insbesondere aus der vergrößerten Darstellung in Fig. 7 hervorgeht, sind die beiden Rollen 16 für die beiden elastischen Seile 12 durch eine Zwischenscheibe 17 voneinander getrennt. Die beiden Rollen 16 können drehfest auf einer gemeinsamen Achse, die drehbar in der Zwischenscheibe 17 gelagert ist, angeordnet sein.

Weiterhin ergibt sich aus Fig. 17, dass die Rollen 16 und die Zwischenscheibe 17 in einem Gehäuse 18 angeordnet sind. Die zum Schlitten 11 weisende Stirnseite des Gehäuses 18 ist zur Durchführung der beiden Abschnitte 14 und 15 der elastischen Seile 12 offen. Das Gehäuse 18 kann weiterhin als Anschlag für die Begrenzung des Verfahrweges des Schlittens 11 aus der Profilschiene von der ausgezogenen Position des Umlenkelements 2 in dessen eingezogene Position dienen.

Die beiden elastischen Seile 12 sind so angeordnet und ihre Länge ist so bemessen, dass in der eingezogenen Position des Umlenkelements 2, in der der Schlitten 11 an dem Gehäuse 18 der Umlenkeinrichtung 13 anliegen kann, eine Zugspannung auf den Schlitten 11 und somit auf das Umlenkelement 2 wirkt.

Wie aus den Fig. 6 und 10 sowie den Querschnittsdarstellungen der Fig. 5 und 9 hervorgeht, sind die zweiten Abschnitte 15 der beiden elastischen Seile 12 in einem seitlich geschlossenen und sich über die gesamte Länge der Profilschiene erstreckenden Kanal 19 angeordnet. Die beiden ersten Abschnitte 14 der beiden elastischen Seile 12 verlaufen hingegen zwischen dem Gehäuse 18 und dem Schlitten 11 über der Führungsbasis 1 frei.

Die Profilschiene weist, wie aus den Querschnittsdarstellungen der Fig. 5 und 9 hervorgeht, zwei seitlich vorstehende Gleitschienen 20 auf. Der Schlitten 11 weist in seinen seitlichen Bereichen zwei Gehäuseteile 21 zur Aufnahme der Gleitschienen 20 und ein mit den beiden Gehäuseteilen 21 verbundenes plattenförmiges Montageteil 22 auf, an dem die Enden der beiden ersten Abschnitte 14 der elastischen Seile 12 befestigt sind und die Achse 10 der Umlenkrolle für den kettenartigen Strang 4 gelagert ist. Die Gehäuseteile 21 sind als Gehäuselager mit darin angeordneten Gleitlagern ausgebildet.

Die freien Enden der zweiten Abschnitte 15 der beiden elastischen Seile 12 sind im Bereich des Endes der Profilschiene, das in Richtung des Verfahrweges von der eingezogenen Position zu der ausgezogenen Position des Umlenkelements 2 weist, festgelegt. An diesem Ende ist ein quer zur Profilschiene verlaufender und an deren beiden Seiten vorstehender Steg 23 angeordnet. Der Steg 23 ist über eine in seinem mittleren Bereich abgewinkelte Lasche 24 am Ende der Profilschiene befestigt. In seinem einen quer zur Profilschiene vorstehenden Bereich ist auf dem Steg 23 ein Haltering 24 zur Fixierung des kettenartigen Strangs 4 an der betreffenden Stelle montiert. In dem anderen an der gegenüberliegenden Seite der Profilschiene vorstehenden Bereich ist auf dem Steg 23 eine ringförmige Gleitdurchführung 25 vorgesehen, durch die das Trum 6 mit dem zweiten Anschlusspunkt 8 des kettenartigen Strangs 4 beim Verfahren des Strangs 4 geführt wird.

Das Trum 6 mit dem zweiten Anschlusspunkt 8 weist in einen Bereich, der an der vom Umlenkelement 2 abgewandten Seite der Gleitdurchführung 25 liegt, eine radial über den Strang 4 vorstehende Manschette 26 auf, deren Außendurchmesser größer ist als der Innendurchmesser der Gleitdurchführung 25. Die Manschette 26 ist am Trum 6 so fixiert, dass sie in der eingezogenen Position des Umlenkelements 2 axial an der Gleitdurchführung 25 anliegt und somit den Verfahrweg des Umlenkelements 2 aus der ausgezogenen Position in die eingezogene Position begrenzt.

Die Profilschiene weist an ihrer dem Schlitten 11 gegenüberliegenden Längsseite Halterungsmittel 27 auf, die in Längsrichtung der Profilschiene verstellbar und feststellbar angeordnet sind. Die Halterungsmittel 27 sind, wie insbesondere aus Fig. 2 hervorgeht, an den beiden Endbereichen der Profilschiene angeordnet. Sie weisen jeweils ein sich unterhalb der Profilschiene erstreckendes plattenförmiges Teil 28 auf, an dem Klemmschuhe 29 beidseitig der Profilschiene angeordnet sind, die in seitliche, sich über die Länge der Profilschiene erstreckende Nuten derselben eingreifen. An die plattenförmige Teile 28 schließen sich, von der Profilschiene wegführend, Stege 30 an, die zur Befestigung der Führungsbasis 1 auf einer Basis, zum Beispiel einem Teil eines Handhabungsgerätes, dienen. Die Stege 30 weisen sich in ihrer Längsrichtung erstreckende Schlitze 31 auf, durch die (in der Zeichnung nicht dargestellte) Schraubbolzen zur Befestigung der Führungsbasis 1 an dem betreffenden Teil des Handhabungsgerätes greifen können, wobei längs der Schlitze 31 eine Verstellmöglichkeit der Führungsbasis 1 gegenüber diesem Teil besteht.

Bei den in den Zeichnungsfiguren zu sehenden Strang 4, in dem die (in der Zeichnung nicht dargestellten) Versorgungsleitungen anordenbar sind, handelt es sich um eine geschlossene rohrförmige Energieführungskette, wobei benachbarte Glieder dieser Kette durch im Inneren der Kette angeordnete Gelenkelemente verschwenkbar miteinander verbunden sind. Die Gelenkverbindung der Glieder lässt eine dreidimensionale Bewegung der Kette zu.

### Bezugzeichenliste

- 1: Führungsbasis
- 2: Umlenkelement
- 3: Umlenkbogen
- 4: Strang
- 5: Trum
- 6: Trum
- 7: erster Anschlusspunkt
- 8: zweiter Anschlusspunkt
- 9: Rückstelleinrichtung
- 10: Achse
- 11: Schlitten
- 12: elastisches Seil
- 13: Umlenkeinrichtung
- 14: erster Abschnitt
- 15: zweiter Abschnitt
- 16: Rolle
- 17: Zwischenscheibe
- 18: Gehäuse
- 19: Kanal
- 20: Gleitschiene
- 21: Gehäuseteil
- 22: Montageteil
- 23: Steg
- 24: Haltering
- 25: Gleitdurchführung
- 26: Manschette
- 27: Halterungsmittel
- 28: plattenförmiges Teil
- 29: Hemmschuh
- 30: Steg
- 31: Schlitz

## Patentansprüche

1. Führungssystem für Versorgungsleitungen für ein Handhabungsgerät, insbesondere für einen Roboter, mit einer Führungsbasis (1), die eine Führungsschiene aufweist, einem durch die Führungsbasis (1) längs eines linearen Verfahrweges geführten Umlenkelement (2), das an einem Schlitten (11) angeordnet ist, der durch die Führungsschiene längs des Verfahrweges geführt ist, und einem ketten-, schlauch- oder bandartigen Strang (4), in oder an dem die Versorgungsleitungen anordenbar sind, wobei der Strang (4), einen Umlenkbogen (3) bildend, um das Umlenkelement (2) geführt ist und zwei an den Enden des Umlenkbogens (3) anschließende Trume (5, 6) mit jeweils einem an deren freien Enden angeordneten Anschlusspunkt aufweist, nämlich einem ersten, zur Führungsbasis (1) stationären Anschlusspunkt (7) und einem zweiten, relativ zur Führungsbasis (1) beweglichen Anschlusspunkt (8), und wobei das Umlenkelement (2) durch eine auf das Trum (5, 6) mit dem zweiten Anschlusspunkt (8) wirkende Zugkraft längs des Verfahrweges gegen eine Rückstellkraft von einer eingezogenen Position in eine ausgezogene Position verfahrbar ist, wobei die Rückstellkraft durch eine an oder in der Führungsbasis angeordnete Rückstelleinrichtung (9) erzeugbar ist, **dadurch gekennzeichnet, dass** die Rückstelleinrichtung (9) mindestens ein elastisches Seil (12) oder elastisches Band aufweist, das um eine zur eingezogenen Position des Umlenkelements (2) benachbart an der Führungsbasis (1) angeordnete Umlenkeinrichtung (13) geführt ist und daran anschließend einen ersten Abschnitt (14) aufweist, der mit dem Umlenkelement (2) verbunden ist, und einen zweiten Abschnitt (15) aufweist, der mit der Führungsbasis (1) verbunden ist, wobei das Ende des ersten Abschnitts des mindestens einen elastischen Seils oder Bandes am Schlitten (11) befestigt ist, und die Umlenkeinrichtung (13) an der Stirnseite der Führungsschiene angeordnet ist, die in Richtung des Verfahrweges von der ausgezogenen in die eingezogene Position des Umlenkelements (2) weist, und ein Gehäuse (18) aufweist, das an seiner zum Umlenkelement (2) hinweisenden Stirnseite eine Öffnung für die beiden Abschnitte des mindestens einen elastischen Bandes oder Seils aufweist.

2. Führungssystem nach Anspruch 1, **dadurch gekennzeichnet, dass** die Umlenkeinrichtung (13) eine Rolle aufweist, an deren Peripherie das mindestens eine elastische Seil (12) oder Band anliegt und die im Gehäuse (18) gelagert ist.

3. Führungssystem nach Anspruch 1 oder 2, **dadurch gekennzeichnet, dass** die Umlenkeinrichtung den Verfahrweg des Umlenkelements (2) in die eingezogene Position begrenzt.

4. Führungssystem nach einem der Ansprüche 1 bis 3, **dadurch gekennzeichnet, dass** die Führungsschiene als Profilschiene ausgebildet ist.

5. Führungsschiene nach Anspruch 4, d a - **durch gekennzeichnet**, dass das Gehäuse (18) als Anschlag für die Begrenzung des Verfahrweges des Schlittens (11) auf der Profilschiene von der ausgezogenen Position des Umlenkelements (2) in die eingezogene Position dient.

6. Führungssystem nach Anspruch 4, **dadurch gekennzeichnet, dass** die Profilschiene zwei seitlich vorstehende Gleitschienen (20) und der Schlitten (11) in seinen seitlichen Bereichen jeweils ein Gehäuseteil (21) zur Aufnahme einer Gleitschiene (20) und ein mit den beiden Gehäuseteilen (21)verbundenes plattenförmiges Montageteil (22) aufweist, an dem das Umlenkelement (2) befestigt ist.

7. Führungssystem nach einem der Ansprüche 1 bis 6, **dadurch gekennzeichnet, dass** der zweite Abschnitt (15) des mindestens einen elastischen Seils (12) oder Bandes sich in einer Rinne oder einem seitlich geschlossenen Kanal (19) der Führungsschiene erstreckt.

8. Führungssystem nach einem der Ansprüche 1 bis 7, **dadurchgekennzeichnet**, dass der erste Abschnitt (14) des mindestens einen elastischen Seils (12) oder Bandes sich innerhalb der Führungsschiene erstreckt und sein Endbereich mit einem durch einen Schlitz (31) sich ins Innere der Führungsschiene erstreckenden Bereich des Schlittens (11) verbunden ist.

9. Führungssystem nach Anspruch 8, **dadurch gekennzeichnet, dass** der Schlitz (31) durch ein mit dem Schlitten (11) mitlaufendes, aufrollbares Band oder durch einen Faltenbalg nach außen geschlossen ist.

10. Führungssystem nach einem der Ansprüche 1 bis 9, **dadurch gekennzeichnet, dass** das Umlenkelement (2) als Umlenkrolle ausgebildet ist, an deren Peripherie der Umlenkbogen (3) des Strangs (4) anliegt und deren Achse (10) am Schlitten drehbar gelagert ist.

11. Führungssystem nach Anspruch 10, **dadurch gekennzeichnet, dass** die Achse (10) der Umlenkrolle senkrecht zur Achse (10) der als Rolle ausgebildeten Umlenkeinrichtung (13) für das elastische Seil (12) oder Band angeordnet ist.

12. Führungssystem nach einem der Ansprüche 1 bis 11, **dadurch gekennzeichnet, dass** das Ende des zweiten Abschnitts (15) des mindestens einen elastischen Seils (12) oder Bandes an dem Ende der Führungsschiene befestigt ist, das in Richtung des Verfahrweges von der eingezogenen Position zur ausgezogenen Position des Umlenkelements weist.

13. Führungssystem nach einem der Ansprüche 1 bis 12, **dadurch gekennzeichnet, dass** die Führungsschiene an ihrer vom Schlitten (11) wegweisenden Seite Halterungsmittel aufweist, die in Längsrichtung der Führungsschiene verstellbar und feststellbar angeordnet sind.

14. Führungssystem nach einem der Ansprüche 1 bis 13, **da** - **durch gekennzeichnet**, dass die Rückstelleinrichtung zwei elastische Seile (12) oder Bänder aufweist.

15. Handhabungsgerät, insbesondere Roboter, mit einen Führungssystem gemäß einem der Ansprüche 1 bis 14, wobei die Führungsbasis an einem ersten Teil des Handhabungsgeräts angeordnet und das Trum (5) des ketten-, schlauch- oder bandartigen Strangs (4) mit dem ersten Anschlusspunkt (7) mit diesem Teil verbunden und das Trum (6) mit dem zweiten Anschlusspunkt (8) mit einem zum ersten Teil beweglichen zweiten Teil des Handhabungsgeräts verbunden ist.

## Claims

1. Guide system for supply lines for a handling device, particularly for a robot, having a guide base (1), displaying a guide rail, a deflecting element (2) that is guided along a linear travel path by the guide base (1) and located on a slide (11) that is guided by the guide rail along the travel path, and a chain-like, hose-like or belt-like strand (4), in or on which the supply lines can be arranged, where the strand (4), forming a reversing bend (3), is guided around the deflecting element (2) and displays two branches (5, 6) adjoining the ends of the reversing bend (3), each having a connecting point located on its free end, specifically a first connecting point (7) that is stationary relative to the guide base (1) and a second connecting point (8) that moves relative to the guide base (1), and where the deflecting element (2) can travel from a retracted position into an extended position, by means of a tensile force acting on the branch (5, 6) having the second connecting point (8) and against a restoring force, where the restoring force can be generated by a restoring device (9) located on or in the guide base, **characterized in that** the restoring device (9) displays at least one elastic cord (12) or elastic belt that is guided around a deflecting device (13) located on the guide base (1), adjacent to the retracted position of the deflecting element (2), and, adjoining it, a first section (14) that is connected to the deflecting element (2), and a second section (15) that is connected to the guide base (1), where the end of the first section of the at least one elastic cord or belt is fastened to the slide (11) and the deflecting device (13) is located on the face end of the guide rail that faces in the direction of the travel path from the extended position of the deflecting element (2) to the retracted position and displays a housing (18), the side of which facing towards the deflecting element (2) displays an opening for the two sections of the at least one elastic belt or cord.

2. Guide system according to Claim 1, **characterized in that** the deflecting device (13) displays a roller, against the circumference of which the at least one elastic cord (12) or belt lies and which is mounted in the housing (18) .

3. Guide system according to Claim 1 or 2, **characterized in that** the deflecting device limits the travel path of the deflecting element (2) into the retracted position.

4. Guide system according to one of Claims 1 to 3, **characterized in that** the guide rail is designed as a profiled rail.

5. Guide rail according to Claim 4, **characterized in that** the housing (18) serves as a stop to limit the travel path of the slide (11) on the profiled rail from the extended position of the deflecting element (2) to the retracted position.

6. Guide system according to Claim 4, **characterized in that** the profiled rail displays two, laterally projecting sliding rails (20) and the slide (11) displays a housing part (21) in each of its lateral areas for accommodating a sliding rail (20), and a plate-like mounting part (22), connected to the two housing parts (21), to which the deflecting element (2) is fastened.

7. Guide system according to one of Claims 1 to 6, **characterized in that** the second section (15) of the at least one elastic cord (12) or belt is located in a gutter or a laterally closed channel (19) of the guide rail.

8. Guide system according to one of Claims 1 to 7, **characterized in that** the first section (14) of the at least one elastic cord (12) or belt is located within the guide rail and its end area is connected to an area of the slide (11) extending through a slit (31) into the interior of the guide rail.

9. Guide system according to Claim 8, **characterized in that** the slit (31) is closed off from the outside by a roll-up belt moving with the slide (11), or by bellows.

10. Guide system according to one of Claims 1 to 9, **characterized in that** the deflecting element (2) is designed as a deflection roller, on whose circumference the reversing bend (3) of the strand (4) rests and whose axle (10) is mounted on the slide in rotating fashion.

11. Guide system according to Claim 10, **characterized in that** the axle (10) of the deflection roller is perpendicular to the axle (10) of the deflecting device (13), designed as a roller, for the elastic cord (12) or belt.

12. Guide system according to one of Claims 1 to 11, **characterized in that** the end of the second section (15) of the at least one elastic cord (12) or belt is fastened to the end of the guide rail that faces in the direction of the travel path from the retracted position of the deflecting element to the extended position.

13. Guide system according to one of Claims 1 to 12, **characterized in that**, on its side facing away from the slide (11), the guide rail displays retaining means, arranged in adjustable and lockable fashion in the longitudinal direction of the guide rail.

14. Guide system according to one of Claims 1 to 13, **characterized in that** the restoring device displays two elastic cords (12) or belts.

15. Handling device, particularly a robot, having a guide system according to one of Claims 1 to 14, where the guide base is located on a first part of the handling device, and the branch (5) of the chain-like, hose-like or belt-like strand (4) having the first connecting point (7) is connected to this part, and the branch (6) having the second connecting point (8) is connected to a second part of the handling device that moves relative to the first part.

## Revendications

1. Système de guidage de lignes d'alimentation d'un dispositif de manutention, en particulier d'un robot, comprenant une base de guidage (1) qui présente un rail de guidage, un élément de renvoi (2) qui est guidé par la base de guidage (1) le long d'un trajet de déplacement linéaire et qui est disposé sur un chariot (11) guidé par le rail de guidage le long du trajet de déplacement, et un cordon (4) en forme de chaîne, de tuyau ou de bande dans ou sur lequel les lignes d'alimentation peuvent être disposées, le cordon (4), qui constitue un arc de renvoi (3), étant guidé autour de l'élément de renvoi (2) et présentant deux brins (5, 6) qui sont contiguës aux extrémités de l'arc de renvoi (3) et présentent chacun un point de raccordement disposé à leurs extrémités libres, à savoir un premier point de raccordement (7) qui est fixe par rapport à la base de guidage (1) et un second point de raccordement (8) mobile par rapport à la base de guidage (1), et dans lequel l'élément de renvoi (2) est mobile le long du trajet de déplacement d'une position rétractée à une position déployée contre une force de rappel par une force de traction agissant le long du trajet de déplacement (5, 6) sur le brin (5, 6) avec le second point de liaison (8), la force de rappel pouvant être générée par un dispositif de rappel (9) disposé sur ou dans la base de guidage, **caractérisé en ce que** le dispositif de rappel (9) comprend au moins un câble élastique (12) ou une bande élastique qui est guidé autour d'un dispositif de renvoi (13) disposé à proximité de la position rentrée de l'élément de renvoi (2) sur la base de guidage (1) et comprend ensuite une première section (14) qui est reliée à l'élément de renvoi (2) et une seconde section (15), qui est relié à la base de guidage (1), l'extrémité de la première section de l'au moins un câble ou bande élastique étant fixée au chariot (11), et le dispositif de renvoi (13) étant disposé sur la face frontale du rail de guidage, qui est dirigé dans la direction du trajet de déplacement de la position déployée à la position rétractée de l'élément de renvoi (2) et présente un boîtier (18) qui présente, sur sa face frontale dirigée vers l'élément de renvoi (2), une ouverture pour les deux sections de la au moins une bande ou câble élastique.

2. Système de guidage selon la revendication 1, **caractérisé en ce que** le dispositif de renvoi (13) présente un galet à la périphérie duquel repose le au moins un câble élastique (12) ou la au moins une bande et qui est monté dans le boîtier (18).

3. Système de guidage selon la revendication 1 ou 2, **caractérisé en ce que** le dispositif de renvoi limite le trajet de déplacement de l'élément de renvoi (2) vers la position rétractée.

4. Système de guidage selon l'une des revendications 1 à 3, **caractérisé en ce que** le rail de guidage est conçu sous forme de rail profilé.

5. Rail de guidage selon la revendication 4, **caractérisé en ce que** le boîtier (18) sert de butée pour limiter la course du chariot (11) sur le rail profilé de la position sortie de l'élément de renvoi (2) à la position rétractée.

6. Système de guidage selon la revendication 4, **caractérisé en ce que** le rail profilé présente deux glissières (20) faisant saillie latéralement et le chariot (11) présente dans ses zones latérales une partie de boîtier (21) pour recevoir une glissière (20) et une partie de montage (22) en forme de plaque qui est reliée aux deux parties de boîtier (21) et à laquelle est fixé l'élément de renvoi (2).

7. Système de guidage selon l'une des revendications 1 à 6, **caractérisé en ce que** la deuxième section (15) de l'au moins un câble élastique (12) ou la bande s'étend dans une rainure ou un canal fermé latéralement (19) du rail de guidage.

8. Système de guidage selon l'une des revendications 1 à 7, **caractérisé en ce que** la première section (14) de l'au moins un câble élastique (12) ou la bande s'étend à l'intérieur du rail de guidage et sa partie d'extrémité est reliée à une partie du chariot (11) s'étendant à travers une fente (31) vers l'intérieur du rail de guidage.

9. Système de guidage selon la revendication 8, **caractérisé en ce que** la fente (31) est fermée vers l'extérieur par une bande enroulable qui avance avec le chariot ou par un soufflet.

10. Système de guidage selon l'une des revendications 1 à 9, **caractérisé en ce que** l'élément de renvoi (2) est réalisé sous la forme d'un rouleau déflecteur, contre la périphérie duquel s'appuie l'arc de renvoi (3) du brin (4) et dont l'axe (10) est monté de manière rotative sur le chariot.

11. Système de guidage selon la revendication 10, **caractérisé en ce que** l'axe (10) rouleau déflecteur est disposé perpendiculairement à l'axe (10) du dispositif de renvoi (13), qui est conçu comme une poulie, pour le câble élastique (12) ou la bande.

12. Système de guidage selon l'une des revendications 1 à 11, **caractérisé en ce que** l'extrémité de la seconde section (15) de l'au moins un câble élastique (12) ou la bande est fixée à l'extrémité du rail de guidage qui est dirigée dans la direction du trajet de déplacement de la position rétractée à la position déployée de l'élément de renvoi.

13. Système de guidage selon l'une des revendications 1 à 12, **caractérisé en ce que** le rail de guidage présente, sur son côté opposé au chariot (11), des moyens de retenue qui sont disposés de manière réglable et verrouillable dans la direction longitudinale du rail de guidage.

14. Système de guidage selon l'une des revendications 1 à 13, **caractérisé en ce que** le dispositif de rappel comporte deux câbles élastiques (12) ou bandes.

15. Dispositif de manutention, en particulier d'un robot, comprenant un système de guidage selon l'une des revendications 1 à 14, dans lequel la base de guidage est disposée sur une première partie du dispositif de manutention et le brin (5) du cordon (4) en forme de chaîne, de tuyau ou de bande est relié à cette partie présentant le premier point de connexion (7) et la brin (6) présentant le deuxième point de connexion (8) est reliée à une seconde partie du dispositif de manutention mobile par rapport à la première partie.
